(19) Europäisches Patentamt
European Patent Office
Office européen des brevets

(11) **EP 2 325 725 A1**

(12) **EUROPÄISCHE PATENTANMELDUNG**
veröffentlicht nach Art. 153 Abs. 4 EPÜ

(43) Veröffentlichungstag:
**25.05.2011 Patentblatt 2011/21**

(51) Int Cl.:
*G06F 3/03* (2006.01)   *G06T 17/40* (0000.00)

(21) Anmeldenummer: **08874819.9**

(86) Internationale Anmeldenummer:
**PCT/RU2008/000392**

(22) Anmeldetag: **24.06.2008**

(87) Internationale Veröffentlichungsnummer:
**WO 2009/157792 (30.12.2009 Gazette 2009/53)**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(71) Anmelder: **Rurin, Oleg Stanilasvovich
Moscow 127018 (RU)**

(72) Erfinder: **Rurin, Oleg Stanilasvovich
Moscow 127018 (RU)**

(74) Vertreter: **Jeck, Anton
Jeck - Fleck - Herrmann
Patentanwälte
Klingengasse 2/1
71665 Vaihingen/Enz (DE)**

(54) **VERFAHREN ZUM REDUZIEREN EINES EFFEKTS AUF VIRTUELLE OBJEKTE**

(57)     Ein Verfahren zur Erzeugung einer Wirkung auf virtuelle Objekte besteht darin, dass
- eine zweite Gruppe von Identifikationsblöcken, die die Position des Zielpunkts eines virtuellen Zeigers im realen, dreidimensionalen Raum bestimmt, positioniert wird,
- die Koordinaten des Zielpunkts eines virtuellen Zeigers im realen, dreidimensionalen Raum im Hinblick auf das reale, physikalische Basiskoordinatensystem bestimmt wird,
- die Koordinaten des Aggregats der geometrischen Stelle der Punkte des virtuellen Zeigers im Hinblick auf den Zielpunkt des virtuellen Zeigers eingestellt werden,
- im realen, dreidimensionalen Raum im Hinblick auf das reale, physikalische Basiskoordinatensystem die Koordinaten des Aggregats der geometrischen Stelle der Punkte des virtuellen Zeigers bestimmt werden, wobei diese Punkte in die Domäne der Koordinaten des Betriebsbereichs von Displaygeräten fällt,
- die Population von virtuellen Objekten gebildet wird, deren Koordinaten in die erwähnte Domäne im realen, dreidimensionalen Raum fallen, und
- die vorgeschriebenen Aktionen zum Modifizieren der virtuellen Objekte aus der gebildeten Population der virtuellen Objekte durchgeführt werden.

Fig. 1

**Beschreibung**

Die Erfindung bezieht sich auf Informationstechnologien und die Computertechnik bzw. auf Dateneingabegeräte und Geräte zur Steuerung von virtuellen Objekten im virtuellen, dreidimensionalen Raum, wobei diese Objekte auf einem Monitor oder auf einer anderen Datenanzeigeeinrichtung dargestellt werden. Das Verfahren gemäß der Erfindung ermöglicht, die virtuellen Objekte im virtuellen, dreidimensionalen Raum mit der Anbindung der ausgeführten Handlungen an die Koordinaten des echten, dreidimensionalen Raums zu steuern.

Aus dem Patent 6 057 827 [1] ist ein Verfahren zur automatischen Positionierung des Zeigers (Cursors) für die Computermodellierung bekannt. Gemäß diesem Verfahren hat der Nutzer die Möglichkeit, den Zeiger im Bereich des zweidimensionalen, geometrischen Orts von Punkten zu platzieren. Die Punkte stellen ein dreidimensionales Objekt auf dem Display dar. Gemäß dieser Entscheidung wird der Zeiger automatisch auf den geometrischen Ort der Punkte verschoben, der das dreidimensionale Objekt vorgibt, das näher zur durch den Nutzer festgelegten Position des Zeigers liegt und mittels des Zeigers auf dem Display vorgegeben wird. Aber bei diesem Verfahren ist es für den Nutzer kompliziert, den Zeiger genau zu positionieren, weil es in mehreren Fällen relativ schwierig ist, auf Basis eines zweidimensionalen, flachen Bilds die dreidimensionale Lage der Objekte des virtuellen Raums richtig einzuschätzen und den Zeiger richtig zu positionieren. Außerdem können zusätzliche Fehler bei der automatischen Auswahl des dreidimensionalen Objekts entstehen. Das führt zur Notwendigkeit, den Prozess der Positionierung des Cursors zu wiederholen, wodurch die Arbeit des Nutzers wesentlich erschwert wird.

Das computerunterstützte Verfahren und das Computersystem zur Positionierung des Zeigers nach dem US-Patent 2006/0244745 [2] liegen der vorliegenden Erfindung besonders nahe. Bei diesem Verfahren hat der Nutzer die Möglichkeit, bei der Positionierung des Zeigers im dreidimensionalen, virtuellen Raum eine algorithmisch gebildete, dreidimensionale Abbildung auf einem zweidimensionalen Display zu betrachten und unter Berücksichtigung einer zusätzlichen, die Tiefe der Abbildung betreffenden Information zu handeln. Dadurch wird ermöglicht, den Zeiger im dreidimensionalen, virtuellen Raum genauer zu positionieren und weniger Fehler bei der Positionierung zu machen. Der Nachteil dieses Verfahrens besteht darin, dass eine dreidimensionale Abbildung auf einem zweidimensionalen Display auf Grund des Effekts der dynamischen Tiefe entsteht (siehe H. Wallach et al "The kinetic depth effect", Journal of Experimental Psychology, 45, S. 205-217 [3]). Die Verwendung einer zwangsmäßigen Animation der angezeigten Objekte für den Effekt der dreidimensionalen Abbildung ist ein künstliches Verfahren. Das Verfahren kann nur für die Lösung der spezifischen Aufgaben in einem engen Anwendungsbereich (z.B. dreidimensionale, mathematische Modellierung oder Herstellung von dreidimensionalen Objekten) eingesetzt werden. Das Verfahren erfordert mehr Zeit und Ressourcen für seine Realisierung. In Echtzeitsystemen, Simulatoren und Spielanwendungen ist dieses Verfahren wenig wirksam.

Der gemeinsame Nachteil des ersten Verfahrens [1] und des zweiten Verfahrens [2] besteht darin, dass diese Verfahren auf der Verwaltung der Objekte des virtuellen, dreidimensionalen Raums auf einer zweidimensionalen Ebene der Datenanzeigeeinrichtungen basieren, ohne dass die durchgeführten Aktionen an die Koordinaten des echten, dreidimensionalen Raums angebunden werden.

Die Aufgabe dieser Erfindung besteht in der Entwicklung eines Verfahrens zur Einwirkung auf virtuelle Objekte des dreidimensionalen, virtuellen Raums, wobei die Steuerungseingriffe auf die Objekte des dreidimensionalen, virtuellen Raums unter Berücksichtigung von genau gemessenen (ausgerechneten) Daten über die gegenseitige Anordnung des Nutzers, der Anzeigeeinrichtung und der Objekte des virtuellen Raums im echten, physischen, dreidimensionalen Koordinatensystem, im Basiskoordinatensystem, getätigt werden sollen.

Die gestellte Aufgabe wird durch die Entwicklung eines Verfahrens zur Einwirkung auf virtuelle Objekte gelöst. Die Aufgabe besteht im Folgenden:

- eine erste Gruppe von Identifikationsblöcken wird im echten, dreidimensionalen Raum angeordnet;
- ein echtes, physisches Basiskoordinatensystem wird im echten, dreidimensionalen Raum gebildet; das Koordinatensystem ist an die räumliche Anordnung der Identifikationsblöcke der ersten Gruppe angebunden;
- die Koordinaten des Arbeitsbereichs der Anzeigeeinrichtungen im echten, dreidimensionalen Raum werden in Bezug auf das echte, physische Basiskoordinatensystem bestimmt;
- die Koordinaten der vorher in digitaler Form gebildeten, dreidimensionalen, virtuellen Objekte werden im echten dreidimensionalen Raum in Bezug auf das echte, physische Basiskoordinatensystem vorgegeben;
- eine zweite Gruppe von Identifikationsblöcken wird angeordnet, die die Lage des Fixierungspunkts des virtuellen Zeigers im echten, dreidimensionalen Raum festlegt;
- und die Koordinaten des Fixierungspunkts des virtuellen Zeigers werden im echten, dreidimensionalen Raum in Bezug auf das echte, physische Basiskoordinatensystem bestimmt;
- die Koordinaten der Gesamtheit des geometrischen Orts der Punkte des virtuellen Zeigers werden in Bezug auf den Fixierungspunkt des virtuellen Zeigers mit der notwendigen Genauigkeit festgelegt;
- die Koordinaten der Gesamtheit des geometrischen Orts der Punkte des virtuellen Zeigers im echten, dreidimensionalen Raum werden mit der notwendiger Genauigkeit in Bezug auf das echte, physische Basiskoordinatensystem bestimmt; die Punkte liegen im Bereich der Koordinaten des Arbeitsbereichs der Anzeigeeinrichtungen;

- die Gesamtheit der virtuellen Objekte wird gebildet, wobei die Koordinaten der Objekte im echten, dreidimensionalen Raum zu dem Bereich gehören, der unter Berücksichtigung der Lage des geometrischen Orts der Punkte des virtuellen Zeigers ausgerechnet wird, und die Punkte zu dem Bereich der Koordinaten des Arbeitsbereichs der Anzeigeeinrichtungen gehören;
- vorgegebene, virtuelle Handlungen zur Modifizierung der virtuellen Objekte für alle oder für einen Teil der Objekte werden aus der gebildeten Gesamtheit der virtuellen Objekte ausgeführt.

Davon ausgehend besteht der Hauptunterschi zwischen dem Verfahren gemäß der Erfindung und anderen, aus dem Stand der Technik bekannten Verfahren zur Positionierung des Zeigers auf die Objekte des dreidimensionalen, virtuellen Raums darin, dass der Zeiger gemäß der Erfindung im echten, physischen, dreidimensionalen Basiskoordinatensystem positioniert wird, dass alle Objekte des dreidimensionalen, virtuellen Raums sowie die Datenanzeigeeinrichtung auch konkrete Koordinaten aufweisen. Die Koordinaten werden in diesem echten, physischen Basiskoordinatensystem festgelegt oder an das echte, physische Koordinatensystem angepasst.

Das technische Ergebnis des Verfahrens gemäß der Erfindung besteht in der Entwicklung eines Verfahrens zur Positionierung des Zeigers, der die Objekte im virtuellen, dreidimensionalen Raum steuert. Die Position des Zeigers soll genau in einem physischen Koordinatensystem und nicht durch eine zweidimensionale Ebene eines Displays bedingt vorgegeben werden. Dabei sollen mittels des Zeigers nur die virtuellen Objekte des dreidimensionalen, virtuellen Raums gesteuert werden, deren äquivalente, physische Koordinaten in den Wirkungsbereich des Zeigers passen. Diese neuen Eigenschaften des Zeigers erweitern den Anwendungsbereich des Verfahrens gemäß der Erfindung durch die Unterstützung von hochgenauen Simulatoren von physischen Prozessen mit einem hohen Grad an Zuverlässigkeit bei der Simulierung der räumlichen Handlungen im dreidimensionalen, virtuellen Raum, nämlich von Handlungen, Bewegungen, Drehungen oder anderen Effekten, die mit den virtuellen Objekten verbunden sind.

Das Verfahren gemäß der Erfindung zur Einwirkung auf virtuelle Objekte hat eine unabhängige Bedeutung. Dieses Verfahren kann besonders effektiv in Kombination mit einer anpassungsfähigen Bildung der angezeigten Gesamtheit von virtuellen Objekten aufgrund der Analyse der Position des Beobachters verwendet werden. Dafür wird eine dritte Gruppe von Identifikationsblöcken angeordnet. Die dritte Gruppe der Identifikationsblöcke legt die Position des Beobachtungspunkts des Arbeitsbereichs der Anzeigeeinrichtungen bezüglich des echten, physischen Basiskoordinatensystems im echten, dreidimensionalen Raum fest. Der Satz der angezeigten Daten wird durch die Einschließung der angezeigten Gesamtheit des geometrischen Orts der Punkte vom virtuellen Zeiger modifiziert, und der aktuelle Satz der angezeigten, dreidimensionalen, virtuellen Objekte wird aus Folgendem gebildet:

- Eine Information über die gegenseitige Lage im echten, dreidimensionalen Raum in Bezug auf das echte, physische Basiskoordinatensystem der kompletten Gesamtheit der dreidimensionalen, virtuellen Objekte; die virtuellen Objekte werden unter Berücksichtigung der ausgeführten Gesamtheit der vorgegebenen, virtuellen Aktionen und der Lage des angezeigten Bereichs des virtuellen Zeigers modifiziert;
- eine Information über die Lage des Beobachtungspunkts des Nutzers und des Arbeitsbereichs der Anzeigeeinrichtungen;
- eine Information über die Lage des Arbeitsbereichs der Anzeigeeinrichtungen; danach wird der gebildete Satz an die Anzeigeeinrichtung gesendet.

Die oben genannte Reihenfolge der Handlungen ermöglicht den Effekt, der dem Blick auf einen virtuellen, dreidimensionalen Raum durch ein normales Fenster ähnlich ist. Als Fenster treten die Anzeigeeinrichtungen auf. Die Steuerung der virtuellen Objekte erfolgt mit Hilfe des Zeigers über dieses "Fenster". Dadurch wird ermöglicht, die Objekte der virtuellen Welt sowohl vor dem "Fenster" als auch rechts oder links vom "Fenster" und die Objekte, die unterschiedlich weit vom Fenster liegen, zu steuern.

Das Verfahren zur Einwirkung auf die Objekte der virtuellen Welt, Beispiele zur Berechnung der Koordinaten von physischen und virtuellen Objekten sowie ein Beispiel des Verfahrens zur Festlegung der gegenseitig eindeutigen Zuordnung zwischen virtuellen Koordinaten und echten, physischen Koordinaten des Basiskoordinatensystems werden nun näher erläutert.

Das Wesen der vorliegenden Erfindung wird anhand von grafischen Zeichnungen am Beispiel einer der Varianten der Ausführung des Verfahrens gemäß der Erfindung erklärt. Das Verfahren wird im Rahmen eines Systems erklärt, das die Hardware aufweist, die für die Festlegung des Basiskoordinatensystem und die Identifikation der Lage der physischen Objekte notwendig sind, nämlich der Nutzer selbst, technische Einrichtungen zur Dateneingabe, die durch den Nutzer gesteuert werden, und Anzeigeeinrichtungen. Das System beinhaltet auch alle algorithmischen Lösungen und Softwarelösungen, die die Gesamtheit der Handlungen mit materiellen Objekten (Hardware) durchführen, wobei diese Lösungen für die Realisierung dieses Verfahrens notwendig sind.

Fig. 1    eine Übersicht eines Visualisierungssystems für dreidimensionale Ob- jekte des virtuellen Raums und Beispiel der Anzeige des virtuellen Zei- gers in demjenigen Fall, in dem der Zeiger durch den Arbeitsbereich der Anzeigeeinrichtung geht,

Fig. 2    ein Beispiel des Anzeigeschemas des virtuellen Zeigers in demjenigen Fall, in dem der virtuelle Zeiger außerhalb des Arbeitsbereichs der An- zeigeeinrichtung durchgeht,

Fig. 3.    ein Fließbild des Algorithmus des Verfahrens zur Einwirkung auf virtuel- le Objekte,

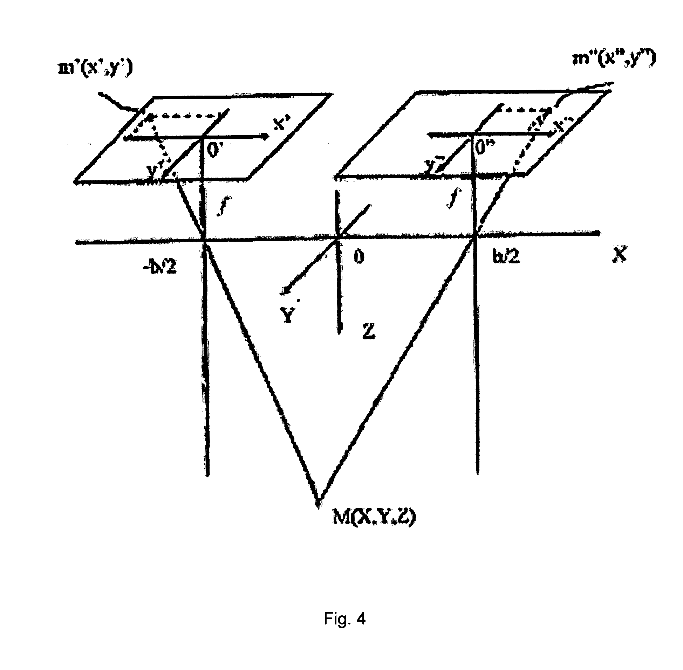

Fig. 4.    Ein Beispiel zur Ermittlung der räumlichen Lage des Objekts (Erken- nungsmarke) mittels der Bilder von zwei Video- oder Fotokameras.

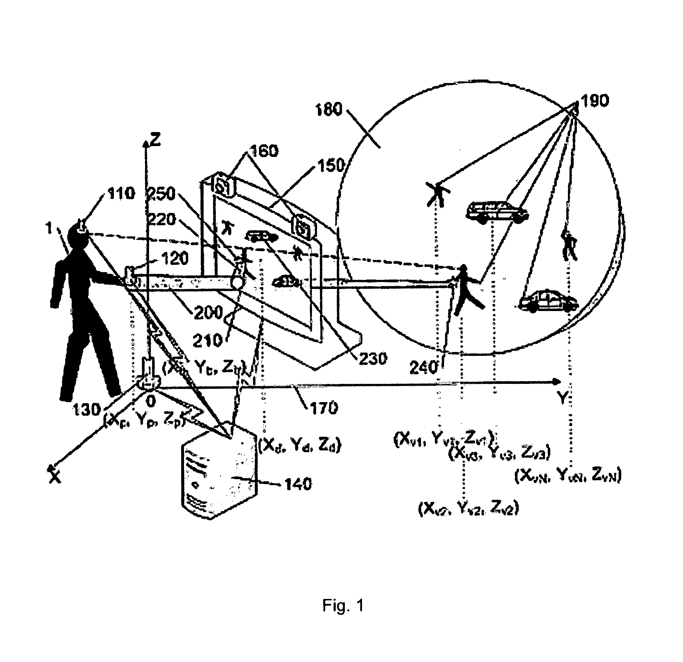

In Fig. 1 ist ein Beispiel der Wechselwirkung eines Nutzers 1 mit dem System dargestellt, das folgende Komponenten beinhaltet. Eine dritte Gruppe von Identifikationsblöcken 110 wird am Kopf des Nutzers 1 befestigt. Eine zweite Gruppe von Identifikationsblöcken 120 wird am Körper des Nutzers 1 (z. B. auf der Hand) befestigt. Die Basiseinrichtung weist eine erste Gruppe von Identifikationsblöcken 130 und einen Block zur Datenaufbereitung (in Fig. 1 nicht dargestellt) auf. Eine Recheneinheit 140, die Prozessor-, Speicher- und Schnittstellenbausteine beinhaltet, ermöglicht eine Kommunikation zwischen einer Anzeigeeinrichtung 150 und den Identifikationsblöcken 110, 120, 130 und zwischen der Anzeigeeinrichtung 150 und einer Gruppe von auf der Anzeigeeinrichtung befestigten Identifikationsblöcken 160 und einem Basiskoordinatensystem 170, die an die erste Gruppe der Identifikationsblöcke 130 angebunden ist. Eine Recheneinheit 140 beinhaltet einen dreidimensionalen, virtuellen Raum 180, Objekte 190 des dreidimensionalen, virtuellen Raums, einen virtuellen Zeiger 200 mit einer festgelegten Länge im echten, dreidimensionalen Raum in Bezug auf das Basiskoordinatensystem, einen geometrischen Ort 210 der Punkte der Kreuzung des virtuellen Zeigers 200 mit dem Arbeitsbereich der Datenanzeigeeinrichtung 150, eine Abbildung 220 auf dem Display zur Anzeige des virtuellen Zeigers 200, eine Abbildung 230 auf dem Display zur Anzeige der Objekte des dreidimensionalen, virtuellen Raums, einen Wechselwirkungspunkt 240 des virtuellen Zeigers 200 mit den Objekten 190 des dreidimensionalen, virtuellen Raums im echten, dreidimensionalen Raum in Bezug auf das Basiskoordinatensystem und eine Abbildung 250 auf dem Display der Einrichtung zur Anzeige des Wechselwirkung 240 des virtuellen Zeigers 200 mit den Objekten 190 des dreidimensionalen, virtuellen Raums.

Außerdem sind in Fig. 1 zusätzliche Elemente dargestellt, die die Wechselwirkung mit den virtuellen Objekte nach dem Verfahren gemäß der Erfindung veranschaulichen, nämlich eine schematische Abbildung des virtuellen Zei- gers 200, die die Absicht des Nutzers 1 anzeigt, das ausgewählte, virtuelle Objekt 190 des dreidimensionalen, virtuellen Raums zu steuern, ein Beispiel 220 der Anzeige dieses virtuellen Zeigers auf dem Display der Anzeigeeinrichtung und ein Beispiel 250 des visuellen Effekts der Einwirkung des Zeigers auf das ausgewählte, virtuelle Objekt des dreidimensionalen, virtuellen Raums durch den Zeiger. Der virtuelle Raum 180 mit den im Raum liegenden, virtuellen Objekten 190 stellt einen Satz von vorher gebildeten Daten der Abbildungen der dreidimensionalen, virtuellen Objekte dar, die sich in der Speichereinheit der Recheneinheit 140 befinden. Die virtuellen Objekte 190 im echten Raum werden durch die Festlegung von deren Koordinaten in Bezug auf das Basiskoordinatensystem 170 angeordnet, das im echten Raum liegt. Die Koordinaten der Elemente des Systems (Anzeigeeinrichtung ($X_d$, $Y_d$, Zu), der Fixierungspunkt des virtuellen Zeigers ($X_p$, $Y_p$, $Z_p$), der Anfang des Basiskoordinatensystems ($X_b$, $Y_b$, $Z_b$) in Bezug auf die erste Gruppe 130 der Identifikationsblöcke und andere sind auch in der Speichereinheit der Recheneinheit 140 gespeichert. Wenn es notwendig ist, werden sie auch gemäß dem unten beschriebenen Algorithmus geändert. Die Koordinaten der virtuellen Objekte 190 im echten Raum, z.B. wie in Fig.1 dargestellt, Koordinaten ($X_v$i, $Y_v$i, $Z_v$i), ($X_{v2}$, $Y_{v2}$, $Z_v$2), ..., ($X_{vN}$, $Y_{vN}$, $Z_{vN}$) werden auf Basis der relativen Koordinaten von virtuellen Objekten 190 im virtuellen Raum und der echten, physischen Koordinaten der Elementen des Systems berechnet. Die Koordinaten der virtuellen Objekte sind vorher in der Speichereinheit der Recheneinheit 140 gespeichert. Die Konvertierung der Koordinaten am Übergang vom virtuellen zum physischen System erfolgt mit Hilfe der bekannten Formel zur Konvertierung von Koordinaten.

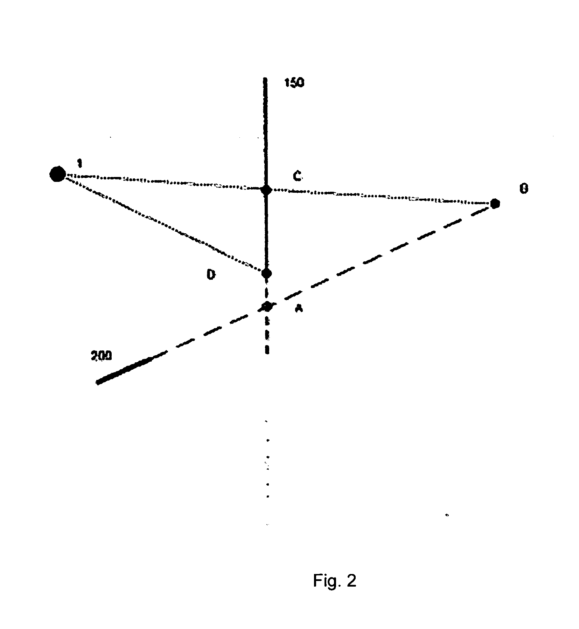

Fig. 2 zeigt eine grundsätzliche Möglichkeit, den virtuellen Zeiger auf dem Display der Anzeigeeinrichtung auch in demjenigen Fall anzuzeigen, in dem der virtuelle Zeiger außerhalb des Arbeitsbereichs der Anzeigeeinrichtung durchgeht (Draufsicht). Wie in Fig. 2 dargestellt ist, wird der virtuelle Zeiger, der durch die Punkte A und B auf dem Display geht, in Form des Objekts angezeigt, das vom Punkt D zum Punkt C durchgeht.

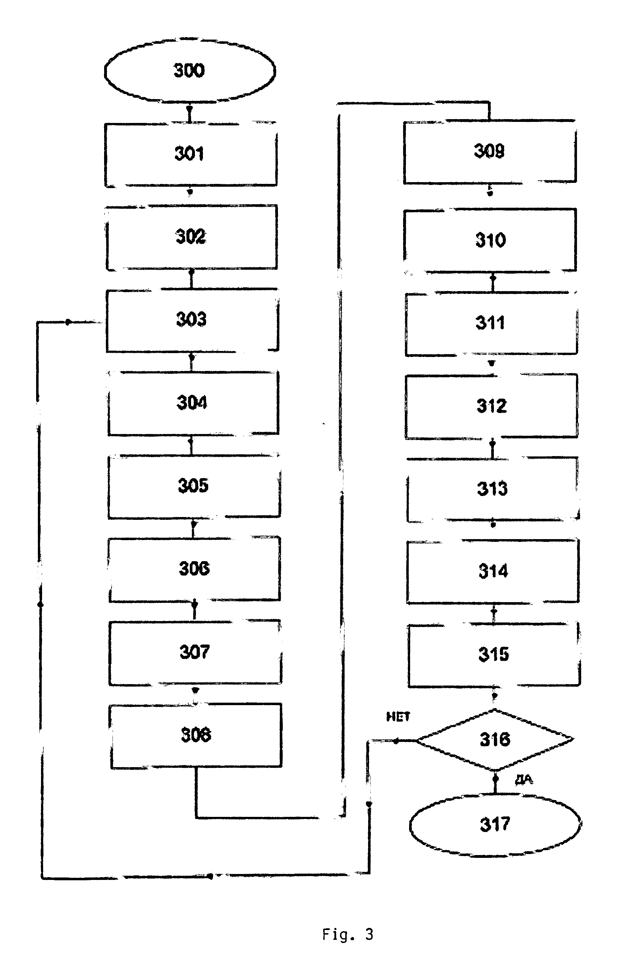

Der Algorithmus (Fig. 3) hat folgende Schritte:

300    Anfang

301    eine erste Gruppe von Identifikationsblöcken wird im echten, dreidimensiona- len Raum angeordnet;

302    ein echtes, physisches Basiskoordinatensystem wird im echten, dreidimensi- onalen Raum gebildet; das Koordinatensystem ist an die räumliche Anord- nung der Identifikationsblöcke der ersten Gruppe angebunden;

303    eine zweite Gruppe von Identifikationsblöcken wird im echten, dreidimensio- nalen Raum angeordnet, die die Lage des Fixierungspunkts des virtuellen Zeigers im echten, dreidimensionalen Raum festlegt;

304 eine dritte Gruppe von Identifikationsblöcken wird angeordnet; die dritte Gruppe von Identifikationsblöcken legt die Position des Beobachtungspunkts des Arbeitsbereichs der Anzeigeeinrichtungen bezüglich des echten, physischen Basiskoordinatensystems im echten, dreidimensionalen Raum fest;

305 die Koordinaten von vorher in digitaler Form gebildeten, dreidimensionalen, virtuellen Objekte werden im echten, dreidimensionalen Raum in Bezug auf das echte, physische Basiskoordinatensystem vorgegeben;

306 die Koordinaten des Arbeitsbereichs der Anzeigeeinrichtungen im echten, dreidimensionalen Raum werden in Bezug auf das echte, physische Basis- koordinatensystem bestimmt;

307 ein Befehl des Nutzers zur Steuerung der Position oder Form des virtuellen Zeigers oder anderer äußere Faktoren, die die Steuerung der Position oder Form des virtuellen Zeigers beeinflussen, wird analysiert;

308 die Koordinaten des Fixierungspunkts des virtuellen Zeigers im echten, drei- dimensionalen Raum wird in Bezug auf das echte, physische Basiskoordina- tensystem bestimmt;

309 die Koordinaten der Gesamtheit des geometrischen Orts der Punkte des vir- tuellen Zeigers werden in Bezug auf den Fixierungspunkt des virtuellen Zei- gers mit der notwendigen Genauigkeit festgelegt;

310 die Koordinaten der Gesamtheit des geometrischen Orts der Punkte des vir- tuellen Zeigers, die im Bereich der Koordinaten des Arbeitsbereichs der An- zeigeeinrichtungen liegen, werden im echten, dreidimensionalen Raum in Bezug auf das echte, physische Basiskoordinatensystem mit der notwendi- gen Genauigkeit bestimmt;

311 die Gesamtheit der virtuellen Objekte wird gebildet; die Koordinaten der Ob- jekte im echten, dreidimensionalen Raum gehören zu dem Bereich, der unter Berücksichtigung der Lage des geometrischen Orts der Punkte des virtuellen Zeigers ausgerechnet wird; die Punkte gehören zum Bereich der Koordinaten des Arbeitsbereichs der Anzeigeeinrichtungen;

312 ein Befehl des Nutzers zur Bildung der notwendiger Gesamtheit der virtuellen Handlungen oder anderer äußeren Faktoren wird analysiert, die die Bildung der notwendigen Gesamtheit der virtuellen Aktionen mit virtuellen Objekten beeinflussen, die zum Wirkungsbereich des virtuellen Zeigers gehören;

313 vorgegebene, virtuelle Aktionen zur Modifizierung der virtuellen Objekte für alle oder für einen Teil der Objekte werden aus der gebildeten Gesamtheit der virtuellen Objekte ausgeführt;

314 ein Satz der angezeigten Daten wird durch die Einschließung der angezeig- ten Gesamtheit des geometrischen Orts der Punkte des virtuellen Zeigers modifiziert, und ein aktueller Satz der angezeigten, dreidimensionalen, virtu- ellen Objekte wird gebildet;

315 der gebildete Satz der angezeigten Daten wird auf der Anzeigeeinrichtung (en) angezeigt;

316 mit einem Befehl über den Abschluss der Arbeit erfolgt ein Übergang zum Punkt 317, ansonsten ein Übergang zum Punkt 303;

317 Abschluss.

Dieses System ist eine der Ausgestaltungen des Verfahrens gemäß der Erfindung. Es ist einem Fachmann klar, dass auch andere Ausgestaltungen für eine konkrete Hardware-Realisierung des vorliegenden Verfahrens möglich sind. Unter anderem hängt eine konkrete Hardware-Realisierung des vorliegenden Verfahrens von der konkreten Ausführung der Identifikationsblöcke ab.

Der Identifikationsblock stellt eine Einrichtung dar, die den Empfang oder das Senden oder Empfang/Senden der Signale in einem der Frequenzbereiche (Ultraschall, Infrarot, optischer Bereich oder Radiobereich) ausführt. Abhängig von der Realisierung kann eine aktive oder passive Einrichtung verwendet sein. Beispiele der Realisierung der Empfangs- und Sendegeräte, Videokameras und Stereo-Videokameras im Ultraschallbereich sowie Sende- und Empfangsgeräte, die im Bereich der Radiowellen arbeiten, sind in der technischen Literatur und Patentliteratur breit dargestellt. Die Auswahl einer konkreten Art der Sende- und Empfangseinrichtungen gehört zu den normalen Aufgaben beim Projektieren. Abhängig von der ausgewählten Art des Identifikationsblocks können einige Identifikationsblöcke (außer dem Basisidentifikationsblock) aus dem System ausgeschlossen werden.

Signale, die von den Identifikationsblöcken kommen, die im Sendemodus arbeiten, werden durch die Identifikationsblöcke empfangen, die im Empfangsmodus arbeiten. Nach der Aufbereitung in der Recheneinheit werden die Signale zur Ermittlung der Position des Arbeitsbereichs der Anzeigeeinrichtungen, des Fixierungspunkts des virtuellen Zeigers, sowie (eventuell) der Position des Beobachtungspunkts des Arbeitsbereichs der Anzeigeeinrichtung des Nutzers bezüglich des echten, physischen Basiskoordinatensystems verwendet.

Das Verfahren gemäß der Erfindung basiert auf einer korrekten und genauen Ermittlung der oben genannten Koordinaten von Elementen des Systems. Zum Beispiel werden bei der Realisierung des Identifikationsblocks auf der Basis von Videokameras die Koordinaten des dreidimensionalen Objekts folgendermaßen berechnet (dieser Fall ist ein konkretes Beispiel für die Realisierung der Theorie, die näher im Kurs für Epipolargeometrie erklärt wird):

Betrachten wir die Situation, wenn zwei Kameras von unterschiedlichen Standpunkten eine Szene aufnehmen. Das Paar der Bilder, die dabei aufgenommen werden, heißt Stereobildpaar. Betrachten wir den Fall, wenn gleiche Kameras so untergebracht sind, dass ihre optischen Achsen parallel liegen, und die Gerade, die durch die optischen Zentren durchgeht, senkrecht zu den optischen Achsen liegt (Diese Gerade heißt Basislinie, und der Abschnitt zwischen den optischen Zentren heißt Basis). Ein allgemeiner Fall kann auf Basis der betrachteten Prinzipien durch die Anwendung der Verfahren zur Transformation von Koordinatensystemen und des Gerätes der Epipolargeometrie modelliert werden.

Nehmen wir an, dass die Länge der Basis gleich b ist. Wählen wir ein globales Koordinatensystem aus. Der Anfang O des Koordinatensystems liegt auf der Basislinie in der Mitte zwischen den optischen Zentren der Kameras. Die Achse OZ ist parallel zu den optischen Achsen, und die Achse OX ist entlang der Basislinie gerichtet (Fig. 3).

Die Koordinatennullpunkte in den Bildebenen der Kameras können sich mit den Kreuzpunkten der optischen Achse mit der Bildebene decken. Die Maßeinheiten für Koordinaten im globalen System und in den Bildebenen der Kameras sind gleich.

Wählen wir einen Punkt mit den globalen Koordinaten X, Y, Z. Die Koordinaten dessen Projektion in der Bildebene der ersten (linken) Kamera werden als (x', y') bezeichnet, und die Koordinaten in der Bildebene der zweiten (rechten) Kamera werden als (x", y") bezeichnet (Die Projektionen eines Punkts in Bildebenen unterschiedlicher Kameras heißen konjugierte Punkte). Es ist leicht zu prüfen, dass

$$x' = f(X + b/2)/Z \; ; \quad x'' = f(X - b/2)/Z \; ; \quad y' = y'' = fY/Z \, .$$

Außerdem decken sich die Koordinaten der konjugierten Punkte (y-Koordinaten) in der Richtung, die senkrecht zur Basislinie liegt. Das hat eine große Bedeutung bei der automatischen Suche der konjugierten Punkte in einem Stereobildpaar, wodurch der Suchbereich wesentlich vermindert werden kann. Aus den ersten beiden Beziehungen folgt, dass $Z = fb / (x' - x'')$.

Das bedeutet, dass, wenn man die Geometrie der Aufnahme kennt und die Koordinaten der Projektionen eines gleichen Punkts in den Bildebenen der Kameras misst, man die Tiefe (Z-Koordinate) dieses Punkts berechnen kann. Ferner kann man mit Hilfe dieser Beziehungen die dreidimensionalen Koordinaten des Punkts komplett berechnen:

$$X = b\frac{(x' + x'')}{2(x' - x'')} \; ; \quad Y = b\frac{(y' + y'')}{2(x' - x'')}$$

Bei der Realisierung des Identifikationsblocks auf der Basis von Sende- und Empfangsgeräten im Ultraschallbereich werden mindestens drei Sende- und Empfangsgeräte verwendet, um die Genauigkeit zu verbessern. Die räumliche Position der Geräte ist mit dem Koordinatensystem verbunden, zum Beispiel mit dem echten, physischen Basissystem. Das Verfahren zur Ermittlung der Koordinaten von räumlichen Objekten für diesen Fall ist ausführlich in der veröffentlichen, internationalen Patentmeldung für die Erfindung "Verfahren und System zur Visualisierung der virtuellen Objekte" (PCT/RU2005/000465 [4]) offenbart.

Aus dem Offenbarten ist es klar, dass die technische Realisierung und praktische Umsetzung des Verfahrens gemäß der Erfindung zur Einwirkung auf virtuelle Objekte auf der Basis der aus dem Stand der Technik bekannten Lösungen möglich ist. Neuheit und Erfindungshöhe des vorliegenden Verfahrens bestehen in der Anwendung der vorgeschlagenen Prinzipien zur genauen räumlichen Positionierung sowie echter, physischer als auch virtueller, angezeigter Objekte im echten, dreidimensionalen Raum in Bezug auf das echte, physische Basiskoordinatensystem. Dabei ergibt diese Art der Positionierung neue, vorher nicht realisierte Möglichkeiten der Arbeit mit den Objekten in der virtuellen Realität.

Betrachten wir einen detaillierten Algorithmus zur Realisierung des gemeldeten Verfahrens für den Fall seiner Anwendung in Kombination mit einer anpassungsfähigen Bildung der angezeigten Gesamtheit von virtuellen Objekten aufgrund der Analyse der Position des Beobachters. Das Fließbild des Algorithmus ist in Fig. 3 dargestellt. Es wird ausreichend anhand der Funktionen 301 - 315 der Blöcke des Algorithmus erklärt.

Einige zusätzliche Erklärungen sind nutzbar, um neue Möglichkeiten zu verstehen, die das vorliegende Verfahren bietet.

Es wurde schon erwährt, dass der Zeiger (nach dem vorliegenden Verfahren) im echten, physischen Basiskoordinatensystem positioniert wird. Alle Objekte des dreidimensionalen, virtuellen Raums und die Datenanzeigeeinrichtung selbst auch haben konkrete Koordinaten, die in diesem echten, physischen Basiskoordinatensystem festgelegt sind.

Zum Beispiel hat der Nutzer die Absicht, Aktionen mit dem Objekt des virtuellen, dreidimensionalen Raums, zum Beispiel mit einem Menschen, wie in Fig. 1 durchzuführen. Die Koordinaten $X_{v3}$, $Y_{v3}$, $Z_{v3}$ dieses Menschen sind im echten, dreidimensionalen Raum in Bezug auf das echte, physische Basiskoordinatensystem vorgegeben. Der Abstand zwischen dem Nutzer und diesem Menschen in der echten Welt beträgt zum Beispiel 10m (1000cm). Es kann leicht berechnet werden, weil die Koordinaten $X_{v3}$, $Y_{v3}$, $Z_{v3}$, sowohl dieses Menschen als auch die Koordinaten $X_p$, $Y_p$, $Z_p$ des Nutzers 1 bekannt sind oder berechnet werden können, wobei die Signale der Identifikationsblöcke verarbeitet werden (Die Aufbereitung erfolgt mit Hilfe eines der oben genannten Verfahren). Der Nutzer 1 hat die Möglichkeit einen bestimmten Maßstab vorzugeben. Das kann ein Maßstab 1:1 oder ein anderer Maßstab sein.

Wenn zum Beispiel der Nutzer den Maßstab 1:20 vorgibt, dann muss der Nutzer die Hand, die mit Sensoren des zweiten Systems der Identifikationsblöcke ausgerüstet ist, genau um 50 cm nach vorne bewegen, um den Baum zu berühren.

Wenn der Maßstab 1:1 verwendet wird, dann müssen alle Aktionen des Nutzers mit den virtuellen Objekten durch dieselben Aktionen aufgerufen werden, wie in demjenigen Fall, in dem die Objekte des echten, physischen Raums gesteuert oder betätigt werden.

In Fig. 1 ist dargestellt, dass auch bei der Abbildung der Anzeige 220 dieses virtuellen Zeigers am Display der Anzeigeeinrichtung in einer zweidimensionalen Ebene eines Displays alle Handlungen des Nutzers im echten, physischen Koordinatensystem (ev. unter Berücksichtigung des vorgegebenen Maßstabs) durchgeführt werden. Das ist schematisch in Fig. 1 in Form des virtuellen Zeigers 200 dargestellt. Die Abbildung des virtuellen Zeigers 200 zeigt die Absicht des Nutzers, das ausgewählte, virtuelle Objekt 190 des dreidimensionalen, virtuellen Raums zu steuern.

Dies ist ein bedingtes Beispiel, aber aus diesem Beispiel folgt, dass dieses Verfahren ermöglicht, die Schulung des Nutzers zum Beispiel auf einem Simulator durchzuführen. Bei der Simulation können nicht nur notwendige Handlungen und Manipulationen mit den Objekten der virtuellen Welt geübt werden, sondern auch die echten Maße der Umgebung nachgebildet werden, in der die Handlungen ausgeführt werden. Das verbessert die Effizienz der Schulung der Nutzer. Das vorliegende Verfahren ist damit in Geräten zur Schulung, in Simulatoren, PC-Spielen, die auf der Modellierung der Realität basieren, und in anderen Anwendungen gewerblich anwendbar.

**Patentansprüche**

1. Verfahren zur Einwirkung auf virtuelle Objekte,
   **dadurch gekennzeichnet, dass**

   - eine erste Gruppe von Identifikationsblöcken im echten, dreidimensionalen Raum angeordnet wird,
   - ein echtes, physisches Basiskoordinatensystem im echten, dreidimensionalen Raum gebildet wird, das an die räumliche Anordnung der Identifikationsblöcke der ersten Gruppe angebunden ist,
   - die Koordinaten des Arbeitsbereichs von Anzeigeeinrichtungen im echten, dreidimensionalen Raum in Bezug auf das echte, physische Basiskoordinatensystem bestimmt werden,
   - die Koordinaten von vorher in digitaler Form ausgebildeten, dreidimensionalen, virtuellen Objekten im echten, dreidimensionalen Raum in Bezug auf das echte, physische Basiskoordinatensystem vorgegeben werden,
   - eine zweite Gruppe von Identifikationsblöcken angeordnet wird, die die Lage des Fixierungspunkts des virtuellen Zeigers im echten, dreidimensionalen Raum festlegt, und die Koordinaten des Fixierungspunkts des virtuellen Zeigers im echten, dreidimensionalen Raum in Bezug auf das echte, physische Basiskoordinatensystem bestimmt werden,
   - die Koordinaten der Gesamtheit des geometrischen Orts der Punkte des virtuellen Zeigers in Bezug auf den Fixierungspunkt des virtuellen Zeigers mit der notwendigen Genauigkeit festgelegt werden,
   - die Koordinaten der Gesamtheit des geometrischen Orts der Punkte des virtuellen Zeigers, die im Bereich der Koordinaten des Arbeitsbereichs der Anzeigeeinrichtungen liegen, im echten, dreidimensionalen Raum in Bezug auf das echte, physische Basiskoordinatensystem mit der notwendigen Genauigkeit bestimmt werden,
   - die Gesamtheit der virtuellen Objekte gebildet wird, deren Koordinaten im echten, dreidimensionalen Raum zum Bereich gehören, der unter Berücksichtigung der Lage des geometrischen Orts der Punkte des virtuellen Zeigers ausgerechnet wird, die zum Bereich der Koordinaten des Arbeitsbereichs der Anzeigeeinrichtungen gehören,
   - und die vorgegebenen, virtuellen Handlungen zur Modifizierung der virtuellen Objekte aus der gebildeten Gesamtheit der virtuellen Objekte ausgeführt werden.

2. Verfahren nach Anspruch 1,
   **dadurch gekennzeichnet,**
   **dass** eine dritte Gruppe von Identifikationsblöcken angeordnet wird, die die Position des Beobachtungspunkts des Arbeitsbereichs der Anzeigeeinrichtungen des Nutzers bezüglich des echten, physischen Basiskoordinatensystems im echten, dreidimensionalen Raum festlegt.

3. Verfahren nach Anspruch 1,
**dadurch gekennzeichnet,**
**dass** der Satz der angezeigten Daten durch die Einschließung der angezeigten Gesamtheit des geometrischen Orts der Punkte des virtuellen Zeigers modifiziert und ein aktueller Satz der angezeigten, dreidimensionalen, virtuellen Objekte auf folgender Basis gebildet werden:

- eine Information über die gegenseitige Lage im echten, dreidimensionalen Raum in Bezug auf das echte, physische Basiskoordinatensystem der kompletten Gesamtheit der dreidimensionalen, virtuellen Objekte, die unter Berücksichtigung der ausgeführten Gesamtheit der vorgegebenen, virtuellen Handlungen und der Lage des angezeigten Bereichs des virtuellen Zeigers modifiziert werden,
- eine Information über die Lage des Beobachtungspunkts des Nutzers des Arbeitsbereichs der Anzeigeeinrichtungen und
- eine Information über die Lage des Arbeitsbereichs der Anzeigeeinrichtungen.

4. Verfahren nach einem der Ansprüche 1 bis 3,
**dadurch gekennzeichnet,**
**dass** die zweite Gruppe der Identifikationsblöcke auf dem Körper des Nutzers angeordnet wird.

5. Verfahren nach Anspruch 3,
**dadurch gekennzeichnet,**
**dass** der gebildete Satz der angezeigten Daten mindestens auf einer Anzeigeeinrichtung angezeigt wird.

6. Verfahren nach Anspruch 1,
**dadurch gekennzeichnet,**
**dass** die zweite Gruppe der Identifikationsblöcke bezüglich des echten, physischen Basiskoordinatensystem beliebig verschoben wird.

7. Verfahren nach Anspruch 1,
**dadurch gekennzeichnet,**
**dass** die zweite Gruppe der Identifikationsblöcke mindestens um eine Koordinatenachse gedreht und somit der Effekt der Drehung des virtuellen Zeigers sichergestellt wird.

8. Verfahren nach Anspruch 1,
**dadurch gekennzeichnet,**
**dass** der geometrische Ort der Punkte des virtuellen Zeigers dynamisch unter Berücksichtigung der Befehle des Nutzers berechnet wird.

9. Verfahren nach Anspruch 1,
**dadurch gekennzeichnet,**
**dass** der geometrische Ort der Punkte dynamisch unter Berücksichtigung des vorgegebenen Algorithmus berechnet wird.

10. Verfahren nach Anspruch 9,
**dadurch gekennzeichnet,**
**dass** der Berechnungsalgorithmus für den geometrischen Ort der Punkte des virtuellen Zeigers dynamisch unter Berücksichtigung aller äußeren Faktoren modifiziert wird.

11. Verfahren nach Anspruch 10,
**dadurch gekennzeichnet,**
**dass** Befehle des Nutzers als äußere Faktoren verwendet werden.

12. Verfahren nach Anspruch 10,
**dadurch gekennzeichnet,**
**dass** Signale von Sensoren als äußere Faktoren verwendet werden.

**13.** Verfahren nach Anspruch 12,
**dadurch gekennzeichnet,**
**dass** visuelle Effekte von Toneffekten begleitet werden.

**14.** Verfahren nach Anspruch 1,
**dadurch gekennzeichnet,**
**dass** die vorgegebenen, virtuellen Handlungen in Punkten, deren Koordinaten zum Bereich gehören, der unter Berücksichtigung der Lage des geometrischen Orts der Punkte des virtuellen Zeigers ausgerechnet wird, automatisch auf der Basis des vorgegebenen Algorithmus ausgeführt werden.

**15.** Verfahren nach Anspruch 1,
**dadurch gekennzeichnet,**
**dass** die vorgegebenen, virtuellen Handlungen in Punkten, deren Koordinaten zum Bereich gehören, der unter Berücksichtigung der Lage des geometrischen Orts der Punkte des virtuellen Zeigers ausgerechnet wird, gemäß den Befehlen des Nutzers ausgeführt werden.

**16.** Verfahren nach Anspruch 14 oder 15,
**dadurch gekennzeichnet,**
**dass** die Veränderung der virtuellen Form oder Größe des virtuellen Zeigers von der Erzeugung des mechanischen Effekts begleitet wird, der der proportionalen Veränderung des Gewichts des virtuellen Zeigers entspricht.

**17.** Verfahren nach Anspruch 1,
**dadurch gekennzeichnet,**
**dass** als vorgegebene, virtuelle Handlungen die Erzeugung der visuellen Effekte in den Punkten verwendet wird, deren Koordinaten in den Bereich passen, der unter Berücksichtigung der Lage des geometrischen Orts der Punkte des virtuellen Zeigers berechnet wurde.

**18.** Verfahren nach einem der Ansprüche 1, 12 bis 17,
**dadurch gekennzeichnet,**
**dass** durch die Anwesenheit des virtuellen Zeigers in einem bestimmten Bereich des virtuellen Raums die umliegenden, virtuellen Objekte beeinflusst werden, ohne dass der virtuelle Zeiger auf der Anzeigeeinrichtung angezeigt wird.

**19.** Verfahren nach Anspruch 1,
**dadurch gekennzeichnet,**
**dass** die Handlungen zur Veränderung der Lage oder der Form des virtuellen Zeigers von visuellen, akustischen, elektromagnetischen oder mechanischen Effekten im Koordinatenbereich des Fixierungspunkts des virtuellen Zeigers begleitet werden.

**20.** Verfahren nach Anspruch 1,
**dadurch gekennzeichnet"**
dass für die Ermittlung der Koordinaten des Fixierungspunkts des virtuellen Zeigers in Bezug auf das Basiskoordinatensystem folgende Aktionen durchgeführt werden:

- die Lage des Fixierungspunkts des virtuellen Zeigers wird bezüglich der Lage der Identifikationsblöcke der zweiten Gruppe vorgegeben, die am Körper des Nutzers befestigt sind,
- die Abstände zwischen den Identifikationsblöcken der zweiten und der ersten Gruppe werden ermittelt,
- die Koordinaten der Identifikationsblöcke der zweiten Gruppe im echten, dreidimensionalen Raum werden in Bezug auf das Basiskoordinatensystem auf Grund der Information über die Abstände zwischen den Identifikationsblöcken der ersten und der zweiten Gruppe errechnet und
- die Position des Fixierungspunkts des virtuellen Zeigers im echten, dreidimensionalen Raum wird in Bezug auf das Basiskoordinatensystem errechnet, wobei die Information über die Lage des Identifikationsblocks der zweiten Gruppe und die Information über die Lage des Fixierungspunkts des virtuellen Zeigers bezüglich der Lage der Identifikationsblöcke der zweiten Gruppe verwendet wird.

**21.** Verfahren nach Anspruch 1,
**dadurch gekennzeichnet,**
**dass** der Identifikationsblock als Sende- und Empfangsgerät für Signale in einem der folgenden Bereiche verwendet wird: Ultraschall, Infrarot, Optik oder Radio.

22. Verfahren nach Anspruch 1,
    **dadurch gekennzeichnet,**
    **dass** eine Videoinformation an den Identifikationsblock gesendet wird.

23. Verfahren nach Anspruch 1,
    **dadurch gekennzeichnet,**
    **dass** der Identifikationsblock in Form einer Erkennungsmarke ausgeführt wird, die mit Hilfe der Videoaufbereitung im Optik- oder Infrarotbereich oder mit Hilfe der Lagebestimmung im Ultraschall- oder Radiobereich identifiziert wird.

24. Verfahren nach Anspruch 1,
    **dadurch gekennzeichnet,**
    **dass** der Abstand zwischen den Identifikationsblöcken mit Hilfe des Verfahrens der Lagebestimmung errechnet wird.

25. Verfahren nach Anspruch 1,
    **dadurch gekennzeichnet,**
    **dass** der Abstand zwischen den Identifikationsblöcken mit Hilfe des Verfahrens der Aufbereitung der Videoinformation über die Lage der Identifkationsblöcke errechnet wird.

26. Verfahren nach Anspruch 1,
    **dadurch gekennzeichnet,**
    **dass** die relative Lage jedes Blocks, der in die erste Gruppe gehört, vor dem Beginn der Anwendung des Verfahrens vorgegeben und fixiert wird.

27. Verfahren nach Anspruch 1,
    **dadurch gekennzeichnet,**
    **dass** die Identifikationsblöcke der ersten Gruppe an der Datenanzeigeeinrichtung befestigt werden.

28. Verfahren nach Anspruch 1,
    **dadurch gekennzeichnet,**
    **dass** die Arbeit der Identifikationsblöcke mittels Synchronisierungsimpulsen synchronisiert wird.

29. Verfahren nach Anspruch 1,
    **dadurch gekennzeichnet,**
    **dass** an die Anzeigeeinrichtung ein zwei- oder dreidimensionales Bild gesendet wird.

Fig. 1

Fig. 2

Fig. 3

Fig. 4

## INTERNATIONAL SEARCH REPORT

| International application No. |
| --- |
| PCT/RU 2008/000392 |

A.    CLASSIFICATION OF SUBJECT MATTER          *G06F 3/03*  *(2006.01)*
                                                *G06T 17/40*  *(2006.01)*

According to International Patent Classification (IPC) or to both national classification and IPC

B.    FIELDS SEARCHED

Minimum documentation searched (classification system followed by classification symbols)

Documentation searched other than minimum documentation to the extent that such documents are included in the fields searched
   G06F 3/00, 3/01, 3/03, 3/033, 3/037, 3/038, 3/041, 3/042, 3/043, 3/046, 3/048, 3/14, 3/147, 3/153, G06T 17/00, 17/40, 15/00, 11/00, 11/80, 13/00, 1/00, 1/020, 3/00, 3/20, 3/40, 3/60, A63B 13/00, 13/04, 13/06, 13/10

Electronic data base consulted during the international search (name of data base and, where practicable, search terms used)

PAJ, Esp@cenet, USPTO DB, FIPS

C.    DOCUMENTS CONSIDERED TO BE RELEVANT

| Category* | Citation of document, with indication, where appropriate, of the relevant passages | Relevant to claim No. |
| --- | --- | --- |
| A | US 2006/0244745 A1 (PETER MAJER et al.) 02.11.2006, paragraphs [0030]-[0035], [0037]-[0046] | 1-29 |
| A | RU 2123718 C1 (KUSIN VIKTOR ALEKSEEVICH et al.) 20.12.1998, the abstract, page 4, first column, line 31 - page 5, second column, line 39 | 1-29 |
| A | US 6198485 B1 (INTEL CORPORATION) 06.03.2001, the abstract, column 3, line 58-column 6, line 50 | 1-29 |
| A | EP 1594040 A2 (ALPINE ELECTRONICS, INC.) 09.11.2005, paragraphs [0034]-[0050] | 1-29 |
| A | JP 61196317 A (NIPPON TELEGRAPH & TELEPHONE) 30.08.1986, the abstract | 1-29 |

☐   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 February 2009 (25.02.2009) | 05 March 2009 (05.03.2009) |

| Name and mailing address of the ISA/ | Authorized officer |
| --- | --- |
| | |
| Facsimile No. | Telephone No. |

Form PCT/ISA/210 (second sheet) (July 1998)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060244745 A

- RU 2005000465 W

**In der Beschreibung aufgeführte Nicht-Patentliteratur**

- **H. Wallach et al.** The kinetic depth effect. *Journal of Experimental Psychology,* vol. 45, 205-217